# EUROPÄISCHE PATENTANMELDUNG

(11) **EP 0 684 287 A1**
(43) Veröffentlichungstag der Anmeldung: **29.11.1995**
(21) Anmeldenummer: 95104904.8
(22) Anmeldetag: 01.04.1995
(51) Int. Cl.: C09B 29/085, C09B 43/42, C09B 67/22

(54) **Wasserunlösliche rote Monoazofarbstoffe, ihre Herstellung und ihre Verwendung**

(30) Priorität: 20.05.1994 DE 4417699
(71) Anmelder: HOECHST MITSUBISHI KASEI CO., LTD., Minato-ku, Tokyo (JP)
(72) Erfinder: Bühler, Ulrich, Dr., D-63755 Alzenau (DE)
(74) Vertreter: Muley, Ralf, Dr.

(57) **Zusammenfassung**

Die vorliegende Erfindung betrifft Azofarbstoffe der allgemeinen Formel I 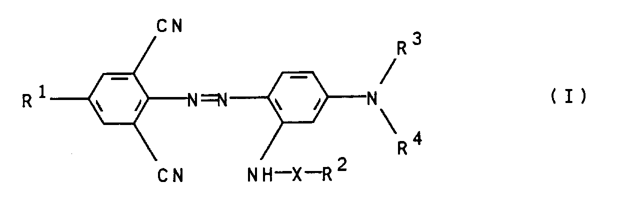
in der
R¹ Methyl, Ethyl, Chlor oder Brom
R² Methyl oder Ethyl
R³ und R⁴ unabhängig voneinander Methoxycarbonylethyl, Ethoxycarbonylethyl, Methoxyethoxycarbonylethyl oder Ethoxyethoxycarbonylethyl und
X -CO- oder -SO₂-
bedeuten, Mischungen dieser Azofarbstoffe, Verfahren zu ihrer Herstellung sowie ihre Verwendung.

## Beschreibung

Die vorliegende Erfindung betrifft Dispersionsfarbstoffe, die sich als kostengünstiger Ersatz für C.I. Disperse Red 60 beim Färben von Polyester und polyesterhaltigen Textilmaterialien eignen.

C.I. Disperse Red 60 ist ein bedeutender anthrachinoider roter Farbstoff, der sich beispielsweise durch hohe Brillanz und Lichtechtheit auszeichnet. Daneben ist er aber auch mit deutlichen Nachteilen behaftet, so zum Beispiel geringe Farbstärke, Empfindlichkeit gegenüber Cu(II)-Ionen beim Färben, deutliche Baumwollanschmutzung beim Färben von Polyester-Baumwoll-Mischgeweben, Farbtonumschlag beim alkalisch-reduktiven Nachbehandeln von Polyesterfärbungen und geringe Sublimierechtheit.

Es hat deshalb nicht an Versuchen gefehlt, C.I. Disperse Red 60 durch Farbstoffe zu ersetzen, die diesem im Farbton möglichst nahekommen, aber die nachteiligen Eigenschaften nicht aufweisen. So ist beipielsweise auch eine Reihe von entsprechenden Azofarbstoffen bzw. Mischungen von Azofarbstoffen vorgeschlagen worden, die aber allesamt das Problem noch nicht in optimaler Weise lösen.

Es wurde nun überraschend gefunden, daß sich die Farbstoffe der nachfolgenden allgemeinen Formel I als kostengünstiger Ersatz für C.I. Disperse Red 60 eignen.

Diesen erfindungsgemäßen Farbstoffen ähnliche Farbstoffe sind bereits bekannt und beispielsweise beschrieben in DE-A 1794402, DE-A 2711130, DE-A 2760126, EP-A 196537, EP-A 254991, EP 391121 sowie JP 63-39965.

Die erfindungsgemäßen Farbstoffe der allgemeinen Formel I sind jedoch diesen bekannten Farbstoffen im färberischen Verhalten auf verschiedenen Substraten sowie bei einigen wichtigen Anwendungs- und Gebrauchsechtheiten wie Thermofixierechtheit, Thermomigrierechtheit, Wasserechtheit, Waschechtheit, Baumwollanschmutzung und Lichtechtheit deutlich überlegen und kommen im Farbton ganz nahe an C.I. Disperse Red 60 heran.

Die vorliegende Erfindung betrifft Azofarbstoffe der allgemeinen Formel I 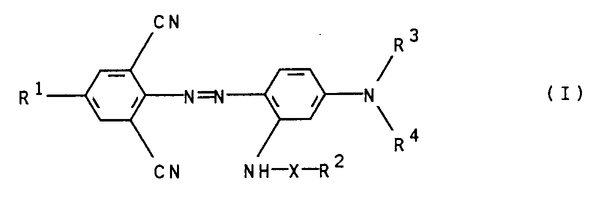
in der
R¹ Methyl, Ethyl, Chlor oder Brom
R² Methyl oder Ethyl
R³ und R⁴ unabhängig voneinander Methoxycarbonylethyl, Ethoxycarbonylethyl, Methoxyethoxycarbonylethyl oder Ethoxyethoxycarbonylethyl und
X -CO- oder -SO₂-
bedeuten.

R¹ bedeutet bevorzugt Methyl oder Chlor,
R³ und R⁴ bedeuten bevorzugt Methoxycarbonylethyl oder
Ethoxycarbonylethyl, wobei R³ und R⁴ bevorzugt gleich sind.

Darüber hinaus ist bevorzugt R¹ Methyl und X -CO-.

Besonders bevorzugt ist R¹ Chlor und X -SO₂-.

Bevorzugte Farbstoffe der allgemeinen Formel I weisen eine oder insbesondere mehrere bevorzugte Bedeutungen für R¹, R³, R⁴ und X auf.

Besonders bevorzugte Farbstoffe der allgemeinen Formel I sind solche, in denen R¹ für Chlor und X für -SO₂- stehen und R³ und R⁴ bevorzugte Bedeutungen haben.

Die Herstellung der erfindungsgemäßen Farbstoffe der allgemeinen Formel I erfolgt vorzugsweise dadurch, daß man einen Azofarbstoff der allgemeinen Formel II 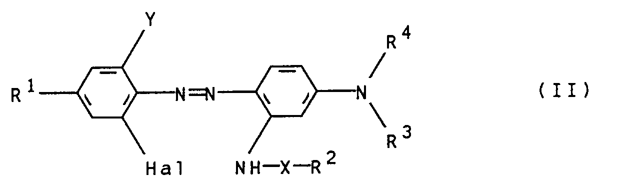
in welcher R¹, R², R³, R⁴ und X die vorstehenden Bedeutungen haben, Y Cyan oder Hal und Hal ein Halogenatom wie Chlor oder insbesondere Brom bedeuten, in an sich bekannter Weise, z. B. nach den Angaben der DE-OS 1809920, der DE-OS 1809921, der GB-PS 1184825, der DE-AS 1544563, der DE-OS 2310745, der DE-AS 2456495, der DE-AS 2610675, der DE-OS 2724116, der DE-OS 2724117, der DE-OS 2834137, der DE-OS 2341109, der US-PS 3821195, der DE-OS 2715034 oder der DE-OS 2134896 einer nukleophilen Austauschreaktion unterwirft, wobei als nucleophiles Agenz das Cyanidion CN^{ϑ} eingesetzt wird. Bei dieser Reaktion wird in dem Farbstoff der Formel II Hal (gegebenenfalls auch das für Y stehende Hal) gegen CN ausgetauscht.

Als Lösungsmittel für die Austauschreaktion werden inerte organische Lösungsmittel, wie z. B. Nitrobenzol oder Glycol- oder Diglycol-mono-methyl oder -mono-ethylether oder Mischungen solcher Lösungsmittel untereinander und mit tertiären organischen Stickstoffbasen, dipolare aprotische Lösungsmittel, wie z. B. N-Methylpyrrolidon, Pyridin, Dimethylformamid, Dimethylsulfoxyd oder Dicyan-dialkylthioether eingesetzt. Weiterhin sind als Medium für die Austauschreaktion Wasser oder wäßrige Systeme bestehend aus Wasser und einem mit Wasser unmischbaren organischen Lösungsmittel, wie z. B. Nitrobenzol, vorzugsweise in Gegenwart eines Netz- bzw. Dispergiermittels oder eines bekannten Phasentransferkatalysators, oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen Stickstoffverbindungen, wie z. B. Pyridin und Pyridinbasen, aus.

Die Reaktionstemperaturen für die Austauschreaktion liegen normalerweise zwischen 20 und 150^{o}C.

Das nucleophile Agenz CN^{ϑ} wird der Reaktion in Form eines gegebenenfalls komplexen Metallcyanids, wie z. B. eines Alkali- oder Erdalkalicyanids, Zinkcyanids, Alkalicyanozinkats oder -ferrats, vorzugswseise aber in Form von Kupfer-I-cyanid oder eines Kupfer-I-cyanid ausbildenden Systems, zugefügt. Besonders bewährt ist der Einsatz einer Kombination von Alkalicyanid mit Kupfer-I-cyanid, wobei das Gewichtsverhältnis von Alkali und Kupfersalz in weiten Grenzen variiert werden kann.

Der gängige Bereich für das Gewichtsverhältnis Alkalicyanid: Kupfer-I-cyanid liegt bei 5:95 bis 95:5. Auch außerhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z. B. einer Kombination von Alkalicyanid mit einem anderen Kupfersalz, vorzugsweise Kupfer-I-salz, wie z. B. einem Kupfer-I-halogenid, zu ersetzen.

Die zur Herstellung der erfindungsgemäßen Farbstoffe erforderlichen Farbstoffe der allgemeinen Formel II können dadurch hergestellt werden, daß eine Diazoniumverbindung eines aromatischen Amins der allgemeinen Formel III 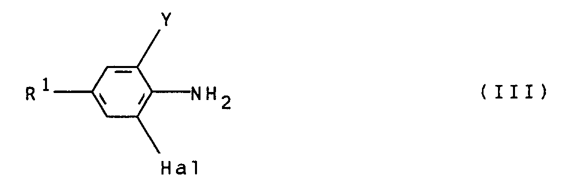
in an sich bekannter Weise mit einer Kupplungskomponente der allgemeinen Formel IV 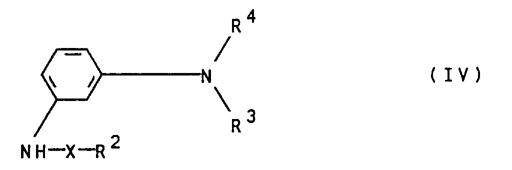
worin Y, Hal, R¹, R², R³, R⁴ und X die oben angegebenen Bedeutungen haben, gekuppelt wird.

Aus den Aminen der allgemeinen Formel III werden die Diazoniumverbindungen in an sich bekannter Weise durch Einwirkung von salpetriger Säure oder anderen Nitrosoniumionen bildenden Systemen in einer Mineralsäure oder einem mineralsauren wäßrigen Medium, einer Niederalkancarbonsäure, wie z. B. Ameisensäure, Essigsäure oder Propionsäure oder deren Mischungen, oder einem organischen Lösungsmittel bei Temperaturen von -15^{o}C bis 40^{o}C erhalten.

Die Kupplung erfolgt ebenfalls in an sich bekannter Weise durch Vereinigung der erhaltenen Diazolösung mit einer Lösung der Kupplungskomponente bei Temperaturen von 0 bis 40^{o}C, vorzugsweise 0 bis 25^{o}C, in einem geeigneten Lösungsmittel, wie z. B. einem Alkanol mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z. B. durch Zugabe von Natriumacetat. Die Kupplung ist nach einigen Stunden beendet, und der Farbstoff der Formel II kann wie üblich isoliert und getrocknet werden.

Die benötigten Kupplungskomponenten der Formel IV lassen sich aus bekannten Handelsprodukten nach bekannten Verfahren herstellen.

Ein weiteres Verfahren zur Herstellung der erfindungsgemäßen Farbstoffe besteht darin, daß man ein Amin der Formel V 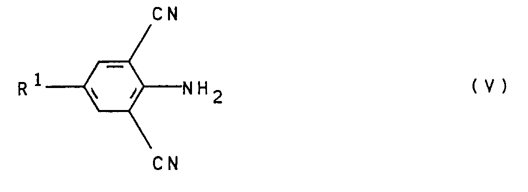
diazotiert und auf eine Kupplungskomponente der Formel IV 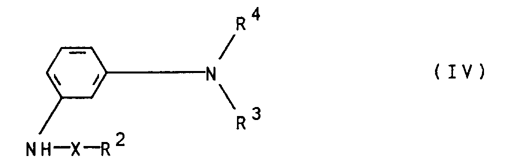
wobei R¹, R², R³, R⁴ und X die oben angegebenen Bedeutungen haben, kuppelt.

Aus den Aminen der allgemeinen Formel V werden die Diazoniumverbindungen in an sich bekannter Weise durch Einwirkung von salpetriger Säure oder anderen, Nitrosoniumionen bildenden Systemen in einer Mineralsäure oder einem mineralsauren wäßrigen Medium, einer Niederalkancarbonsäure, wie z. B. Ameisensäure, Essigsäure oder Propionsäure oder deren Mischungen, vorzugsweise in konzentrierter Schwefelsäure bei Temperaturen von -20^{o}C bis 20^{o}C erhalten.

Die Kupplung erfolgt auch hier in an sich bekannter Weise durch Vereinigung der erhaltenen Diazolösung mit einer Lösung der Kupplungskomponente bei Temperaturen von 0 bis 40^{o}C, vorzugsweise 0 bis 25^{o}C, in einem geeigneten Lösungsmittel, wie z. B. einem Alkanol mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z. B. durch Zugabe von Natriumacetat. Die Kupplung ist nach einigen Stunden beendet, und der Farbstoff kann wie üblich isoliert und getrocknet werden.

Die vorliegende Erfindung betrifft auch Mischungen aus zwei oder mehreren Farbstoffen der allgemeinen Formel I.

Bevorzugte Mischungen sind solche, die nur Farbstoffe der allgemeinen Formel I enthalten, die gleiche Bedeutungen für R¹ und X haben und sich nur bezüglich der Reste R² und/oder R³ und R⁴ voneinander unterscheiden.

In den erfindungsgemäßen Farbstoffmischungen kann das Verhältnis der verschiedenen Farbstoffe der allgemeinen Formel I in relativ weiten Grenzen variieren. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70:30 bis 30:70 bevorzugt, d. h. der Gewichtsanteil eines Farbstoffs beträgt 30 bis 70 %.

Die erfindungsgemäßen Farbstoffmischungen können nach verschiedenen Verfahren hergestellt werden, z. B. durch Mischen der getrennt hergestellten und getrennt formierten Einzelfarbstoffe. Dieser Mischprozeß erfolgt in geeigneten Mischern wie z. B. Taumelmischern.

Getrennt formierte Einzelfarbstoffe können aber auch durch Einrühren in Färbeflotten gemischt werden.

Vorzugsweise werden die erfindungsgemäßen Mischungen durch gemeinsame Formierung der getrennt hergestellten Einzelkomponenten erhalten.

Diese gemeinsame Formierung ist dadurch gekennzeichnet, daß eine Farbstoffmischung aus mindestens zwei Farbstoffen der allgemeinen Formel I in Gegenwart von Dispergiermitteln in geeigneten Mühlen, wie z. B. Kugel- oder Sandmühlen, gemahlen und, wenn eine pulverförmige Farbstoff-Formierung hergestellt werden soll, anschließend sprühgetrocknet wird.

Geeignete Dispergiermittel sind z. B. anionische oder nichtionische Dispergiermittel, die auch gemeinsam eingesetzt werden können. Anionische Dispergiermittel sind z. B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl- oder Alkylaryl-sulfonate, sowie Alkyl-aryl-polyglykolethersulfate. Nichtionische Dispergiermittel oder Emulgatoren sind z. B. Umsetzungsprodukte von Alkylenoxiden, wie z. B. Ethylen- oder Propylenoxid mit alkylierbaren Verbindungen, wie z. B. Fettalkoholen, Fettaminen, Fettsäuren, Phenolen, Alkylphenolen, Arylalkylphenolen, Arylalkylarylphenolen und Carbonsäureamiden, wie z. B. Anlagerungsprodukte von 5 bis 10 Ethylenoxid-Einheiten an C₈-C₁₀-Alkylphenole.

Die Mahlung erfolgt bei Temperaturen zwischen 10 und 90^{o}C, vorzugsweise bei 30 bis 60^{o}C. Bei der gemeinsamen Formierung getrennt hergestellter Einzelkomponenten ist die gemeinsame Mahlung bei Temperaturen über 30^{o}C vorteilhaft. Die Farbstoffteilchen werden dabei mechanisch so weit zerkleinert, daß eine optimale spezifische Oberfläche erreicht wird und die Sedimentation des Farbstoffs möglichst gering ist. Die Teilchengröße der Farbstoffe liegen im allgemeinen zwischen 0,5 und 5 µm, vorzugsweise bei etwa 1 µm.

Es ist vorteilhaft, die getrennt hergestellten Einzelkomponenten der Farbstoffmischung vor der gemeinsamen Mahlung einer gemeinsamen thermischen Behandlung zu unterwerfen. Diese thermische Behandlung ist dadurch gekennzeichnet, daß man die Einzelkomponenten der Farbstoffmischung, gegebenenfalls unter Druck, in Wasser eine halbe bis mehrere Stunden auf Temperaturen von 50 bis 150^{o}C, vorzugsweise 90 bis 130^{o}C, erhitzt und wieder abkühlt. Dieses Erhitzen erfolgt vorteilhaft in Gegenwart eines oder mehrerer Dispergiermittel oder eines organischen Lösungsmittels. Diese Lösungsmittel werden nach der thermischen Behandlung wieder abdestilliert.

In analoger Weise wie vorstehend beschrieben können auch Einzelfarbstoffe der allgemeinen Formel I formiert werden.

Die Farbstoffgehalte der derart hergestellten flüssigen Farbstoffeinstellungen liegen bei 20 bis 40 %, die Dispergiermittelgehalte bei ca. 20 bis 40 %. Bei Pulvereinstellungen liegen die Farbstoffgehalte bei 20 bis 60 % und die Dispergiermittelgehalte bei 40 bis 80 %. Aus ökonomischen Gründen wird ein Farbstoffgehalt von 20 % meist nicht unterschritten.

Die erfindungsgemäßen Farbstoffe bzw. Farbstoffmischungen färben hydrophobe Fasermaterialien, wie Polyester, wie beispielsweise Polyethylenglykolterephthalat, Celluloseester, wie beispielsweise Cellulose-2½-acetat oder Cellulosestriacetat und Polyamid in klaren neutralen Rottönen mit guten Echtheiten.

In gleicher Weise können mit den erfindungsgemäßen Farbstoffen bzw. Farbstoffmischungen auch Mischungen hydrophober Fasermaterialien mit natürlichen Faserstoffen, wie beispielsweise Baumwolle, regenerierte Cellulose oder Wolle gefärbt und bedruckt werden.

Das Färben des genannten Fasergutes mit den erfindungsgemäßen Farbstoffen bzw. Farbstoffmischungen erfolgt in an sich bekannter Weise, vorzugsweise aus wäßriger Suspension, gegebenenfalls in Gegenwart von Carriern, zwischen 80 bis ca. 110^{o}C nach dem Ausziehverfahren oder nach dem HT-Verfahren im Färbeautoklav bei 110 bis 140^{o}C, sowie nach dem sogenannten Thermofixierverfahren, wobei die Ware mit der Färbeflotte geklotzt und anschließend bei etwa 180 bis 230^{o}C fixiert wird. Das Bedrucken der genannten Materialien kann in an sich bekannter Weise so durchgeführt werden, daß die erfindungsgemäßen Farbstoffe, oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230^{o}C mit HT-Dampf, Druckdampf oder Trockenhitze behandelt wird. Man erhält auf diese Weise sehr farbstarke rote Färbungen und Drucke mit sehr guten Echtheitseigenschaften, wie Thermofixierechtheit, Thermomigrierechtheit, Wasserechtheit, Waschechtheit und Lichtechtheit. Beim Färben und Bedrucken von Polyester/Baumwoll-Mischgeweben wird der Baumwollanteil nahezu nicht angeschmutzt, so daß sehr klare Gesamtfärbungen erhalten werden. Der Farbton der Färbungen kommt sehr nahe an den Farbton von Färbungen mit dem anthrachinoiden C.I. Disperse Red 60 heran.

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden und zum Färben in der Masse.

Die Erfindung wird durch die folgenden Beispiele näher erläutert. Prozentangaben sind Gewichtsprozente.

### Beispiel 1

a) In eine Suspension aus 100 ml Dimethylsulfoxid, 4,3 g Natriumcyanid und 14 g Kupfer-I-cyanid werden bei 70 bis 75^{o}C 65,4 g des Farbstoffs der Formel IIa 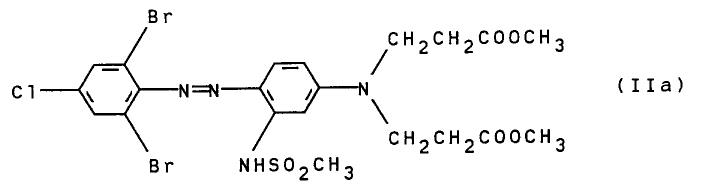 eingetragen und 30 min bei dieser Temperatur gerührt. Dann wird die Temperatur 30 min auf 110^{o}C angehoben und der Ansatz anschließend langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so 35 g eines blaustichig roten Farbstoffs der Formel Ia 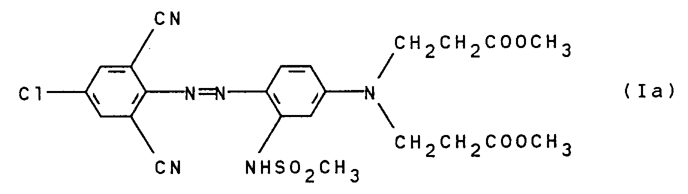 der bei 184^{o}C schmilzt und bei 526 nm sein Absorptionsmaximum besitzt.
   Durch einen praxisüblichen Finish-Prozeß nach wäßriger Mahlung in einer Perlmühle mit einem praxisüblichen Dispergiermittel auf Basis Ligninsulfonat und anschließende Sprühtrocknung erhält man ein färbefertiges Farbstoffpulver mit einem Farbstoffgehalt von 30 %.
b) 1,3 g des so erhaltenen Farbstoffpulvers werden in 1000 g Wasser dispergiert. Die Dispersion wird mit 1 g eines handelsüblichen Dispergiermittels basierend auf einem Kondensationsprodukt aus Naphthalinsulfonsäurenatriumsalz, Formaldehyd und Natriumsulfit versetzt und mit Essigsäure auf einen pH-Wert von 4,5 gestellt. In die so erhaltene Färbeflotte bringt man 100 g eines texturierten Polyestergewebes auf Basis Polyethylenglykolterephthalat ein und färbt 45 Minuten bei 130^{o}C. Nach anschließendem Spülen, reduktiver Nachbehandlung mit einer 0,2%igen Natriumdithionitlösung während 15 Minuten bei 70 bis 80^{o}C, Spülen und Trocknen,
   erhält man eine homogene, klare rote Färbung mit hervorragenden coloristischen Eigenschaften. Bringt man zur Herstellung eines Nachzugs in das Färbebad nochmals 100 g eines texturierten Polyestergewebes auf Basis Polyethylenglykolterephthalat ein und färbt 1 Stunde bei 135^{o}C und behandelt den Nachzug wie vorstehend bei der eigentlichen Färbung angegeben nach, so erhält man ein nahezu farbloses Gewebe.
c) Die unter b) beschriebene Färbung wird wiederholt mit dem Unterschied, daß man das texturierte Polyestergewebe auf Basis Polyethylenglykolterephthalat durch ein Polyester/Zellwolle-Mischgewebe 70:30 ersetzt und einschließlich der Spül- und Trockenvorgänge sonst gleich verfährt.

Die so hergestellte Färbung wird einer Hochveredelung unterzogen, indem sie mit einer wässrigen Lösung imprägniert wird, die in einem Liter 40 g eines Reaktantharzes auf Basis Dimethyloldihydroxyethylenharnstoff, 20 g eines Melaminharzes auf Basis partiell veretherter Methylolmelamine, 20 g einer nichtionischen Polyethylenemulsion, 20 g eines anionischen Weichmachers auf Silikonbasis und 8 g eines Katalysators auf Basis eines Aminsalzes enthält, anschließend eine Minute bei 100^{o}C getrocknet und 30 Sekunden auf 180^{o}C erhitzt wird. Auf diese Weise erhält man eine hochveredelte farbstarke rote Färbung des Polyesteranteils des Mischgewebes mit sehr guten coloristischen Eigenschaften und einer perfekten Waschechtheit bei 60^{o}C mit ECE-Waschmitteln gemäß DIN 54017/C2.

Ein mitgewaschenes Mehrfaserband zeigt auf seinem Polyamidanteil eine Anschmutzung, die nach dem Graumaßstab mit 4 bewertet wird.

### Beispiel 2

a) Werden, wie in Beispiel 1 beschrieben, 59,6 g des Farbstoffs der Formel IIb 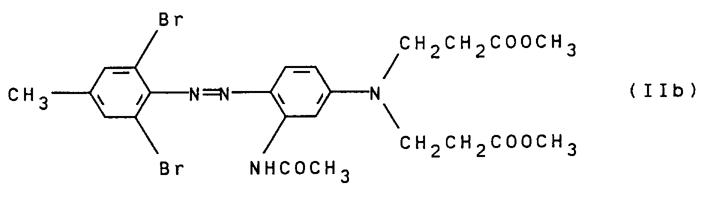 einem Cyanaustausch unterworfen, so erhält man 44 g des blaustichig roten Farbstoffs der Formel Ib 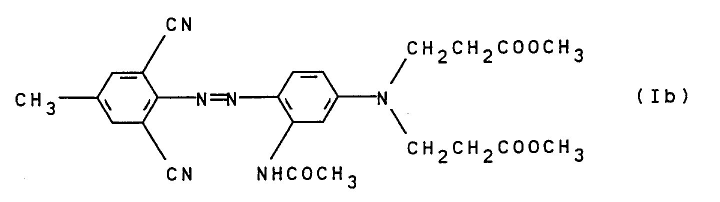 der bei 159^{o}C schmilzt und bei 523 nm sein Absorptionsmaximum hat.

Durch einen praxisüblichen Finish-Prozeß erhält man nach wäßriger Perlmahlung daran eine Flüssigpräparation auf Basis eines Dispergiermittels, das durch Kondensation von Naphthalinsulfonsäure und Formaldehyd hergestellt wird, das 25 % Farbstoff enthält. 30 g dieser Flüssigpräparation werden zusammen mit 15 g eines handelsüblichen Antimigrationsmittels und 2 g Mononatriumphosphat so in eine Klotzflotte eingerührt, daß deren Endvolumen 1 Liter beträgt. Mit dieser Klotzflotte wird ein 65:35 Polyester/Baumwoll-Mischgewebe bei 25^{o}C imprägniert, auf ca. 65 % Flüssigkeitsaufnahme abgequetscht, im Infrarot-Trockner 30 sec. vorgetrocknet, 60 sec. bei 110^{o}C getrocknet und der Dispersionsfarbstoff bei 210^{o}C während 60 sec. in der Polyesterfaser fixiert. Anschließend wird das vorgefärbte Mischgewebe den Färbebedingungen einer nachfolgenden Reaktivfärbung, allerdings ohne Farbstoff, unterworfen. Dazu wird das Mischgewebe bei 25^{o}C mit einem Chemikalienbad, das 240 g/Liter Kochsalz, 15 g/Liter Soda, 11,3 g/Liter einer 50%igen Natronlauge und 4 g/Liter eines Oxidationsmittels auf Basis Benzolsulfonsäure-Derivat enthält, geklotzt, auf 90-100 % Flüssigkeitsaufnahme abgequetscht und 45 sec. bei 102 bis 105^{o}C gedämpft. Zuletzt wird das Mischgewebe in heißem Wasser gespült und getrocknet.

Bei der Betrachtung des ungefärbten Baumwollanteils des Mischgewebes erkennt man, daß er beim Färben des Polyesteranteils mit dem Dispersionsfarbstoff viel weniger angeschmutzt worden als bei der Verwendung von handelsüblichen oder literaturbekannten Rotfarbstoffen ähnlich klarer Nuance, so daß beim Überfärben des Baumwollanteils mit z. B. einem Reaktivfarbstoff gleicher Nuance eine deutlich brillantere Gesamtfärbung entstehen kann.

Analog den Beispielen 1 und 2 lassen sich die erfindungsgemäßen Farbstoffe der folgenden Tabelle herstellen. Sie färben hydrophobe Fasern ebenfalls in vollen roten Nuancen mit ausgezeichneten Echtheiten.

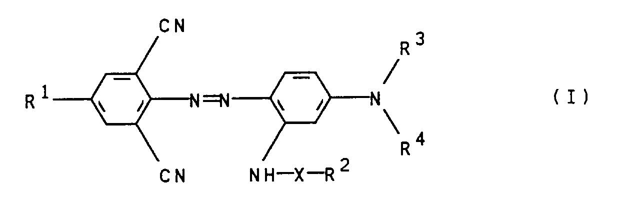

| R¹ | X | R² | R³ | R⁴ |
|---|---|---|---|---|
| Cl | SO₂ | CH₃ | (CH₂)₂COOC₂H₅ | (CH₂)₂COOC₂H₅ |
| Cl | SO₂ | CH₃ | (CH₂)₂COO(CH₂)₂OCH₃ | (CH₂)₂COO(CH₂)₂OCH₃ |
| Cl | SO₂ | CH₃ | (CH₂)₂COO(CH₂)₂OC₂H₅ | (CH₂)₂COO(CH₂)₂OC₂H₅ |
| Cl | SO₂ | C₂H₅ | (CH₂)₂COOCH₃ | (CH₂)₂COOCH₃ |
| Cl | SO₂ | C₂H₅ | (CH₂)₂COOC₂H₅ | (CH₂)₂COOC₂H₅ |
| Cl | SO₂ | C₂H₅ | (CH₂)₂COO(CH₂)₂OCH₃ | (CH₂)₂COO(CH₂)₂OCH₃ |
| Cl | SO₂ | CH₃ | (CH₂)₂COOCH₃ | (CH₂)₂COOC₂H₅ |
| Cl | SO₂ | C₂H₅ | (CH₂)₂COOC₂H₅ | (CH₂)₂COO(CH₂)₂OC₂H₅ |
| Br | SO₂ | CH₃ | (CH₂)₂COOCH₃ | (CH₂)₂COOCH₃ |
| Br | SO₂ | CH₃ | (CH₂)₂COOC₂H₅ | (CH₂)₂COOC₂H₅ |
| Br | SO₂ | CH₃ | (CH₂)₂COO(CH₂)₂OCH₃ | (CH₂)₂COO(CH₂)₂OCH₃ |
| Br | SO₂ | C₂H₅ | (CH₂)₂COOC₂H₅ | (CH₂)₂COOC₂H₅ |
| Br | SO₂ | C₂H₅ | (CH₂)₂COO(CH₂)₂OC₂H₅ | (CH₂)₂COO(CH₂)₂OC₂H₅ |
| CH₃ | SO₂ | CH₃ | (CH₂)₂COOCH₃ | (CH₂)₂COOCH₃ |
| CH₃ | SO₂ | C₂H₅ | (CH₂)₂COOC₂H₅ | (CH₂)₂COOC₂H₅ |
| C₂H₅ | SO₂ | CH₃ | (CH₂)₂COO(CH₂)₂OCH₃ | (CH₂)₂COO(CH₂)₂OCH₃ |
| C₂H₅ | SO₂ | C₂H₅ | (CH₂)₂COOC₂H₅ | (CH₂)₂COOC₂H₅ |
| CH₃ | CO | CH₃ | (CH₂)₂COOC₂H₅ | (CH₂)₂COOC₂H₅ |
| CH₃ | CO | CH₃ | (CH₂)₂COO(CH₂)₂OCH₃ | (CH₂)₂COO(CH₂)₂OCH₃ |
| CH₃ | CO | C₂H₅ | (CH₂)₂COOCH₃ | (CH₂)₂COOCH₃ |
| CH₃ | CO | C₂H₅ | (CH₂)₂COO(CH₂)₂OC₂H₅ | (CH₂)₂COO(CH₂)₂OC₂H₅ |
| C₂H₅ | CO | CH₃ | (CH₂)₂COOCH₃ | (CH₂)₂COOCH₃ |
| C₂H₅ | CO | CH₃ | (CH₂)₂COO(CH₂)₂OCH₃ | (CH₂)₂COO(CH₂)₂OCH₃ |
| C₂H₅ | CO | C₂H₅ | (CH₂)₂COOC₂H₅ | (CH₂)₂COOC₂H₅ |
| Cl | SO₂ | CH₃ | (CH₂)₂COOCH₃ | (CH₂)₂COOC₂H₅ |
| Cl | SO₂ | C₂H₅ | (CH₂)₂COO(CH₂)₂OCH₃ | (CH₂)₂COO(CH₂)₂OC₂H₅ |
| CH₃ | CO | CH₃ | (CH₂)₂COOCH₃ | (CH₂)₂COOC₂H₅ |
| CH₃ | CO | CH₃ | (CH₂)₂COO(CH₂)₂OCH₃ | (CH₂)₂COO(CH₂)₂OCH₃ |
| CH₃ | CO | C₂H₅ | (CH₂)₂COOCH₃ | (CH₂)₂COOC₂H₅ |

## Patentansprüche

1. Azofarbstoff der allgemeinen Formel I 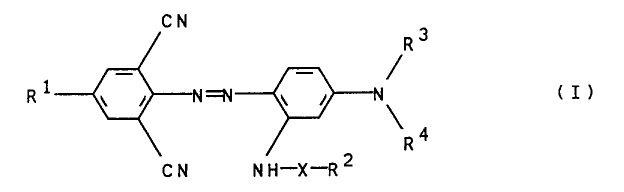 in der
R¹ Methyl, Ethyl, Chlor oder Brom
R² Methyl oder Ethyl
R³ und R⁴ unabhängig voneinander Methoxycarbonylethyl, Ethyoxycarbonylethyl, Methoxyethoxycarbonylethyl oder Ethoxyethoxycarbonylethyl und
X -CO- oder -SO₂-
bedeuten.

2. Azofarbstoff gemäß Anspruch 1, dadurch gekennzeichnet, daß R¹ Methyl oder Chlor bedeutet.

3. Azofarbstoff gemäß Anspruch 1 und/oder 2, dadurch gekennzeichnet, daß R³ und R⁴ Methoxycarbonylethyl oder Ethoxycarbonylethyl bedeuten.

4. Azofarbstoff gemäß einem oder mehreren der Ansprüche 1 bis 3, dadurch gekennzeichnet, daß R¹ Methyl und X -CO-bedeuten.

5. Azofarbstoff gemäß einem oder mehreren der Ansprüche 1 bis 3, dadurch gekennzeichnet, daß R¹ Chlor und X -SO₂-bedeuten.

6. Mischung von mindestens zwei Azofarbstoffen der allgemeinen Formel I gemäß Anspruch 1.

7. Mischung gemäß Anspruch 6, dadurch gekennzeichnet, daß sie nur Farbstoffe der allgemeinen Formel I enthält, die gleiche Bedeutung für R¹ und X haben und sich nur bezüglich der Reste R² und/oder R³ und R⁴ voneinander unterscheiden.

8. Verfahren zur Herstellung der Azofarbstoffe der allgemeinen Formel I eines oder mehrerer der Ansprüche 1 bis 5, dadurch gekennzeichnet, daß man
a) einen Azofarbstoff der allgemeinen Formel II 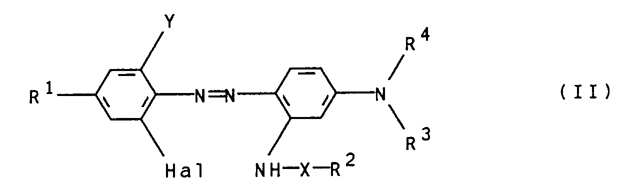 wobei
R¹, R², R³, R⁴ und X die in den Ansprüchen 1 bis 5 angegebenen Bedeutungen besitzen,
Y Cyan oder Hal und
Hal ein Halogenatom
bedeuten, einer nukleophilen Cyanid-Austauschreaktion unterwirft wird, oder daß man
b) ein Amin der Formel V 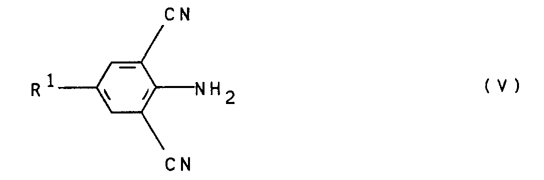 diazotiert und auf eine Kupplungskomponente der Formel IV 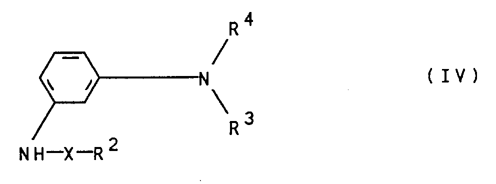 wobei R¹, R², R³, R⁴ und X die oben angegebenen Bedeutungen haben, kuppelt.

9. Verwendung der Azofarbstoffe der Formel I gemäß einem oder mehreren der Ansprüche 1 bis 5 oder der Mischungen der Azofarbstoffe der Formel I gemäß Anspruch 6 und/oder 7 zum Färben oder Bedrucken von hydrophoben Fasermaterialien und deren Mischungen mit natürlichen Faserstoffen.
